# EUROPEAN PATENT APPLICATION

(11) **EP 2 779 385 A2**
(43) Date of publication of application: **17.09.2014**
(21) Application number: 14157754.4
(22) Date of filing: 05.03.2014
(51) Int. Cl.: H02K 21/12

(54) **Rotary electric machine**

(30) Priority: 15.03.2013 JP 2013052590
(71) Applicant: Kabushiki Kaisha Yaskawa Denki, Kitakyushu-shi, Fukuoka 806-0004 (JP)
(72) Inventor: Miyamoto, Yasuhiro, Kitakyushu-shi, Fukuoka 806-0004 (JP)
(74) Representative: Viering, Jentschura & Partner Patent- und Rechtsanwälte

(57) **Abstract**

A rotary electric machine includes: a rotor core in which one or more permanent magnets are provided; and a stator core disposed radially opposite to the rotor core, a plurality of slots being provided in the stator core. Coils are disposed in the slots of the stator core. Further, the number q of slots per pole per phase, which is a value obtained by dividing the number Ns of the slots by the number P of poles of the permanent magnets and the number m of phases of a voltage induced in the coils, is a fraction having an odd denominator and an even numerator, and slot vectors which are electrical phases of the coils disposed in the slots are made to have unequal slot vector pitch angles in which pitches between the slots are unequal.

## Description

### BACKGROUND OF THE INVENTION

### Field of the Invention

An embodiment disclosed herein relates to a rotary electric machine, and more particularly to a rotary electric machine including permanent magnets.

### Description of the Related Art

Conventionally, there is known a rotary electric machine including permanent magnets (see, e.g., Japanese Patent No. 4725684).

In the rotary electric machine disclosed in Japanese Patent No. 4725684, coils are distributed and wound on slots of a stator (coils per pole per phase are distributed and wound in a plurality of slots) such that the number q of slots per pole per phase, which is a value obtained by dividing the number of slots by the number of magnetic poles (number of poles) and the number of phases of a voltage, satisfies 1 < q ≤ 3/2. Thus, it is possible to reduce the distortion of the waveform of the induced voltage and suppress copper loss of the winding from increasing.

In the conventional rotary electric machine as described in Japanese Patent No. 4725684, generally, it has been known that harmonic components are included in the induced voltage. Further, the harmonic components indicate voltage components having frequencies of integer multiples of the fundamental frequency. Further, in the case of a three-phase AC voltage, it has been known that harmonic components corresponding to the orders of odd multiples of 3 (the third order, the ninth order, ...) are cancelled by star connection (Y connection) of coils of the respective phases. Accordingly, only the harmonic components of the fifth order, the seventh order, ... appear. Thus, it is desired to reduce the high-order harmonics.

### SUMMARY OF THE INVENTION

In view of the above, the present disclosure provides a rotary electric machine capable of reducing the high-order harmonics.

In accordance with one aspect of the present disclosure, there is provided a rotary electric machine including: a rotor core in which one or more permanent magnets are provided; and a stator core disposed radially opposite to the rotor core. A plurality of slots is provided in the stator core. Coils are disposed in the slots of the stator core. Further, the number q of slots per pole per phase, which is a value obtained by dividing the number Ns of the slots by the number P of poles of the permanent magnets and the number m of phases of a voltage induced in the coils, is a fraction having an odd denominator and an even numerator, and slot vectors which are electrical phases of the coils disposed in the slots are configured such that slot vector pitch angles between the slot vectors have unequal pitches.

With the above configuration, it is possible to reduce the high-order harmonics in the rotary electric machine.

### BRIEF DESCRIPTION OF THE DRAWINGS

FIG. 1 is a plan view of a rotary electric machine according to an embodiment of the present disclosure;
FIG. 2 is a partially enlarged plan view of the rotary electric machine according to the embodiment of the present disclosure;
FIG. 3 is a diagram for explaining a relationship between the pitch and the width of a permanent magnet of the rotary electric machine according to the embodiment of the present disclosure;
FIG. 4 is a diagram for explaining slot vectors of the rotary electric machine according to the embodiment of the present disclosure;
FIG. 5 is a plan view of a rotary electric machine according to a comparative example;
FIG. 6 is a diagram for explaining slot vectors of the rotary electric machine according to the comparative example;
FIG. 7 is a diagram showing a simulation result on a relationship between harmonic components and the width of the permanent magnet; and
FIG. 8 is a diagram for explaining harmonic components of the rotary electric machine according to the embodiment of the present disclosure and the rotary electric machine according to the comparative example.

### DESCRIPTION OF THE EMBODIMENTS

Hereinafter, an embodiment of a rotary electric machine disclosed herein will be described in detail with reference to the accompanying drawings.

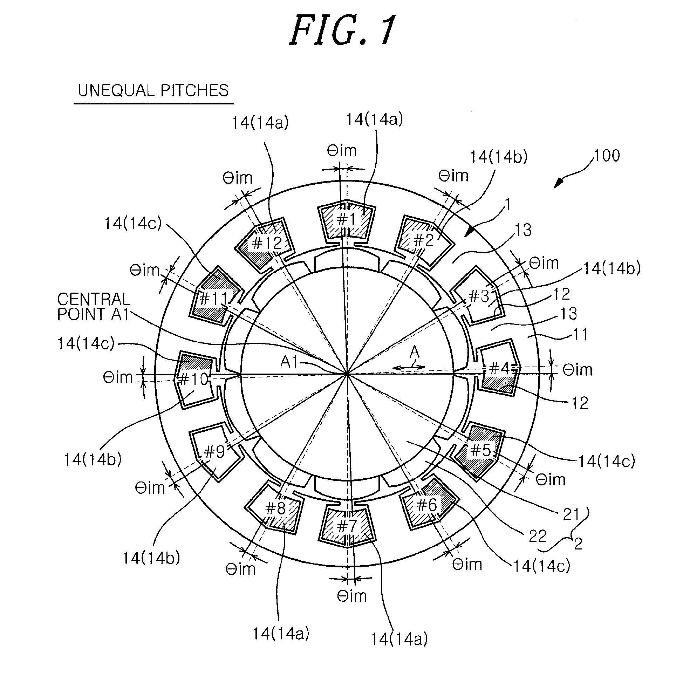

First, a configuration of a rotary electric machine 100 in accordance with the embodiment will be described with reference to FIGS. 1 to 4.

As shown in FIG. 1, the rotary electric machine 100 includes a stator 1 and a rotor 2. The rotor 2 includes a rotor core 21 and the stator 1 includes a stator core 11 which is arranged radially opposite to the rotor core 21 of the rotor 2. A plurality of slots 12 are provided in a stator core 11 of the stator 1. In the present embodiment, the number (Ns) of slots is twelve. In FIG. 1, slot numbers #1 to #12 denote the twelve slots 12, respectively. Further, teeth 13 are provided between the adjacent slots 12.

The present inventors have studied and found that in the rotary electric machine, slot vector pitch angles between slot vectors which are electrical phases of coils disposed in a plurality of slots affect reduction of harmonics, and the high-order harmonics can be reduced by configuring slot vector pitch angles between slot vectors to become unequal.

Accordingly, in the present embodiment, a plurality of slots is configured such that the slot vector pitch angles between slot vectors have unequal pitches. Thus, unlike a case where the slot vector pitch angles between slot vectors have equal pitches, it is possible to reduce the high-order harmonics. Further, it has been confirmed, through simulation which will be described below, that it is possible to reduce the high-order harmonics by configuring a plurality of slots such that the slot vector pitch angles between slot vectors have unequal pitches.

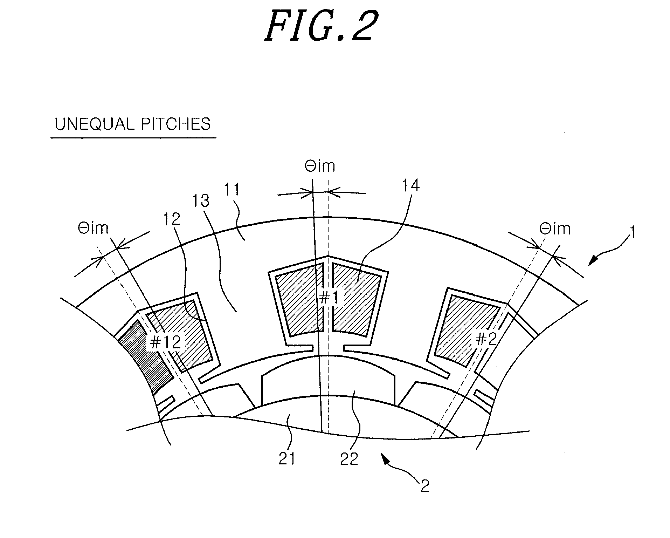

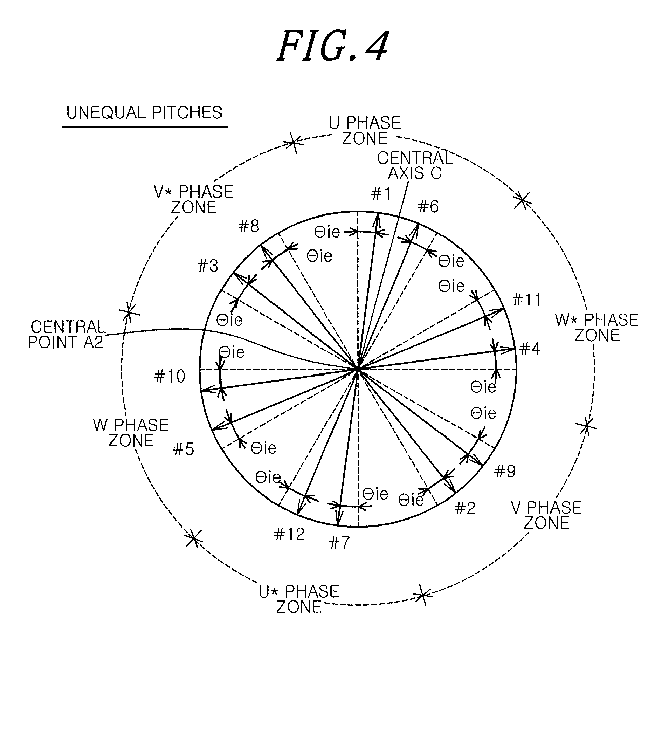

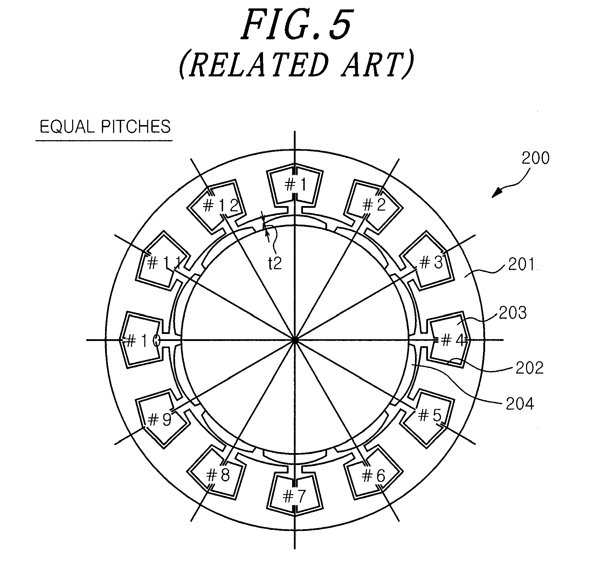

Specifically, as shown in FIGS. 1 and 2, each of the twelve slots 12 is moved clockwise or counterclockwise by a predetermined mechanical pitch angle θᵢₘ (1.65° in this embodiment) while the slots 12 are kept in point symmetry, from a state in which mechanical slot pitch angles have equal pitches (see FIG. 5). Accordingly, slot vector pitch angles become unequal as shown in FIG. 4. In other words, the slots 12 have the same arrangement (positions) even if the slots 12 are rotated by 180° with respect to a central point A1 of the slots 12. Further, the slot vector will be described in detail later.

More specifically, the slot 12 of slot number #1 is moved clockwise by the mechanical pitch angle θᵢₘ (1.65° in this embodiment) as shown in FIG. 2 from the state in which the mechanical slot pitch angles have equal pitches (mechanical slot pitch angle of 30°) as shown in FIG. 5. Further, the slot 12 of slot number #2 is moved counterclockwise by the mechanical pitch angle θᵢₘ from the state in which the mechanical slot pitch angles have equal pitches as shown in FIG. 5. Furthermore, the slot 12 of slot number #3 is moved clockwise by the mechanical pitch angle θᵢₘ as shown in FIG. 1 from the state in which the mechanical slot pitch angles have equal pitches as shown in FIG. 5.

In other words, the mechanical slot pitch angle (26.7° = 30° (mechanical slot pitch angle in the case of equal pitches) - 1.65° - 1.65°) between the slots 12 of slot numbers #1 and #2 is smaller than the mechanical slot pitch angle (33.3° = 30° (mechanical slot pitch angle in the case of equal pitches) + 1.65° + 1.65°) between the slots 12 of slot numbers #2 and #3.

Similarly, the slots 12 of slot numbers #5, #7, #9 and #11 (odd-numbered slots) are moved clockwise by the mechanical pitch angle θᵢₘ as shown in FIG. 1 from the state in which the mechanical slot pitch angles are equal pitches as shown in FIG. 5. Further, the slots 12 of slot numbers #4, #6, #8, #10 and #12 (even-numbered slots) are moved counterclockwise by the mechanical pitch angle θᵢₘ as shown in FIG. 1 from the state in which the mechanical slot pitch angles are equal pitches as shown in FIG. 5.

Coils 14 are disposed (wound) in the slots 12. In the present embodiment, the number m of phases of the voltage induced in the coils 14 is three (U phase, V phase and W phase). Further, the coils 14 are wound in the slots 12 in a concentrated winding manner such that the number q of slots per pole per phase becomes a fraction satisfying 1/4 < q < 1/2. Specifically, the coil 14 is wound on one of teeth 13 in a concentrated winding manner. For example, the U-phase coil 14 (coil 14a indicated by coarse hatching) are wound on the tooth 13 between slot number #1 and slot number #2. Similarly, the U-phase coils 14a are wound on the teeth 13 between slot number #6 and slot number #7, between slot number #7 and slot number #8, and between slot number #12 and slot number #1.

Further, the V-phase coils 14 (coils 14b shown without hatching) are wound in a concentrated winding manner on the teeth 13 between slot number #2 and slot number #3, between slot number #3 and slot number #4, between slot number #8 and slot number #9, and between slot number #9 and slot number #10.

Further, the W-phase coils 14 (coils 14c indicated by fine hatching) are wound in a concentrated winding manner on the teeth 13 between slot number #4 and slot number #5, between slot number #5 and slot number #6, between slot number #10 and slot number #11, and between slot number #11 and slot number #12.

Further, a plurality of (ten in this embodiment) permanent magnets 22 are provided in an outer periphery of the rotor core 21 of the rotor 2. That is, in this embodiment, the number P of poles is ten.

In this embodiment, the number q of slots per pole per phase, which is a value obtained by dividing the number Ns of the slots 12 by the number P of poles of the permanent magnets 22 and the number m of phases of the voltage, is configured to be a fraction having an odd denominator and an even numerator. Specifically, as described above, the number q (Ns/ (mXP)) of slots per pole per phase is configured to be 2/5 (12/(3X10)). Further, if the number m of phases of the voltage is 3, the numerator (the number Ns of slots) of the number q of slots per pole per phase is necessarily a multiple of 3, which makes it difficult to realize balanced winding. Thus, it is preferable that the denominator of the number q of slots per pole per phase is an odd number which is not a multiple of 3.

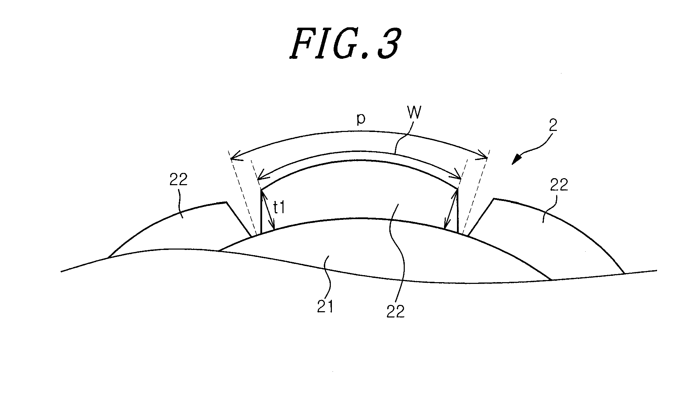

Further, in this embodiment, as shown in FIG. 3, the outer peripheral width W of the permanent magnet 22 (width W in a direction along the circumferential direction of the outer periphery of the permanent magnet 22 in a plane perpendicular to the rotational axis of the rotor) is configured to have a value equal to or greater than 4/5 and equal to or less than 6/7 of a pitch p (in the circumferential direction) between the adjacent permanent magnets 22. Preferably, the outer peripheral width W of the permanent magnet 22 is configured to have a value which is 4/5 of the pitch p between the adjacent permanent magnets 22. In addition, by adjusting the outer peripheral width W of the permanent magnet 22, it is possible to reduce the harmonics of desired orders. There will be described a relationship between the outer peripheral width W of the permanent magnet 22 and harmonic components in detail later.

The permanent magnet 22 has a tapered shape in which the width gradually decreases toward the outer periphery of the rotor 2 when viewed from the axial direction of the rotor. The radius of curvature of the inner periphery of the permanent magnet 22 is substantially equal to the radius of curvature of the outer periphery of the rotor core 21. Further, the radius of curvature of the outer periphery of the permanent magnet 22 is substantially equal to the radius of curvature of the inner periphery of the stator core 11. Thus, the distribution profile of the magnetic flux of the permanent magnet 22 has a substantially rectangular shape (square wave).

On the other hand, if the radius of curvature of the outer periphery (arcuate shape) of a permanent magnet 204 is smaller than the radius of curvature of the inner periphery of the stator core 11 as in a rotary electric machine 200 in accordance with a comparative example shown in FIG. 5, a thickness t2 of the permanent magnet 204 at both ends in a circumferential direction decreases, which may result in demagnetization. Accordingly, in the permanent magnet 204 (e.g., Nd-Fe-B magnet) having an arcuate shape, it is necessary to add heavy rare-earth additives such as dysprosium (Dy) and terbium (Tb) to increase a holding force Hcj.

Further, in case of the permanent magnet 204 having an arcuate shape, since the volume of the permanent magnet 204 decreases, the torque of the rotary electric machine 200 decreases correspondingly. On the other hand, in the permanent magnet 22 of the present embodiment (see FIG. 3), since a thickness t1 of the permanent magnet 22 at both ends in the circumferential direction increases compared to the permanent magnet 204 having an arcuate shape, it is possible to suppress the demagnetization. Also, since the volume of the permanent magnet 22 increases, it is possible to increase the torque of the rotary electric machine 100.

Next, referring to FIGS. 4 to 6, a relationship between electrical phases and positions (slot numbers) for the respective phases (U phase, V phase and W phase) of the coils 14 will be described in comparison with the rotary electric machine 200 in accordance with the comparative example in which the mechanical slot pitch angles (slot vector pitch angles) are equal pitches.

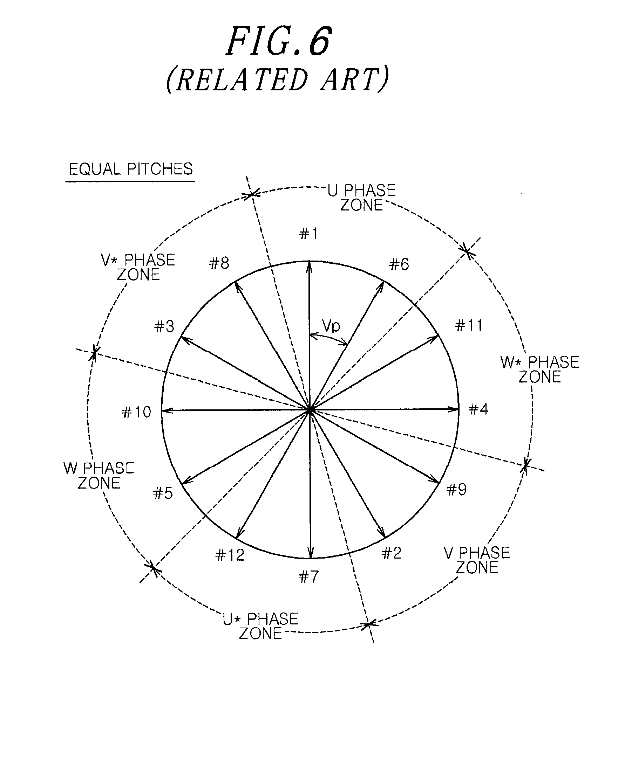

As shown in FIG. 5, in the rotary electric machine 200, twelve slots 202 provided in a stator 201 are arranged at equal pitches. That is, the mechanical slot pitch angles of the slots 202 are 30° (2π/Ns = 360/12). In this case, as shown in FIG. 6, in slot vectors which are magnetomotive forces (Ampere Turn) (electrical phases) generated by coils 203 disposed in the slots 202, slot vector pitch angles between the slot vectors are equal to each other. Electrical slot pitch angles of the rotary electric machine 200 are 150° (π×P/Ns = 180×10/12). Further, the slot vector pitch angles are all 30° (360/12).

In the present embodiment, the twelve slots 12 are configured such that the mechanical slot pitch angles between the slots 12 are unequal (see FIG. 1). Accordingly, in the rotary electric machine 100, the slot vectors, which are magnetomotive forces (Ampere Turn) generated by the coils 14 disposed in the (twelve) slots 12, have unequal pitches, i.e., unequal slot vector pitch angles between the slot vectors as shown in FIG. 4. Further, the unequal pitches mean that the slot vector pitches are not equal.

Specifically, the respective slot vectors #1 to #12 are moved clockwise or counterclockwise by a predetermined pitch angle θᵢₑ (8.25° in this embodiment) while the slot vector pitches are kept in point symmetry from the state in which slot vector pitch angles between the slot vectors are equal (see FIG. 6) such that the slot vectors are arranged to have unequal slot vector pitches. That is, the slot vectors are configured to have the same arrangement (positions) even if the slots 12 are rotated by 180° about a central point A2 of the slot vectors.

Specifically, first, as shown in FIG. 6, twelve slots 12 (slot vectors) are distributed to six phase zones of a U phase zone, a U* phase zone in which a current flows in a direction opposite to that of the U phase zone, a V phase zone, a V* phase zone in which a current flows in a direction opposite to that of the V phase zone, a W phase zone and a W* phase zone in which a current flows in a direction opposite to that of the W phase zone. Then, each of the slot vectors included in one phase zone (for example, slot vectors #1 and #6 included in the U phase zone) is moved clockwise or counterclockwise by the predetermined pitch angle θᵢₑ with respect to a central axis C of a group of slot vectors included in one phase zone as shown in FIG. 4 from the state in which slot vector pitch angles are equal to each other (see FIG. 6) so that the slot vector pitch angles between the slot vectors are unequal.

More specifically, each of the slot vectors included in one phase zone (for example, slot vectors #1 and #6 included in the U phase zone) is moved clockwise (slot vector #1) or counterclockwise (slot vector #6) by the predetermined pitch angle θᵢₑ in the direction toward the central axis C of the group of slot vectors included in one phase zone from the state in which slot vector pitch angles are equal to each other (see FIG. 6). Accordingly, slot vector pitch angles between the slot vectors are configured to have unequal pitches. Further, the mechanical pitch angle θᵢₘ (1.65°) and the pitch angle θᵢₑ (8.25°) have a relationship of θᵢₘ = θᵢₑ / (the number of pairs of poles: 10 poles/2 = 5 in this embodiment).

Thus, the slot vector pitch angle (13.5° = 30° (slot vector pitch angle in the case of equal pitches) - 8.25°-8.25°) between the slot vectors #1 and #6, between the slot vectors #11 and #4, between the slot vectors #9 and #2, between the slot vectors #7 and #12, between the slot vectors #5 and #10 and between the slot vectors #3 and #8 is smaller than the slot vector pitch angle (46.5° = 30° (slot vector pitch angle in the case of equal pitches) + 8.25° + 8.25°) between the slot vectors #6 and #11, between the slot vectors #4 and #9, between the slot vectors #2 and #7, between the slot vectors #12 and #5, between the slot vectors #10 and #3 and between the slot vectors #8 and #1.

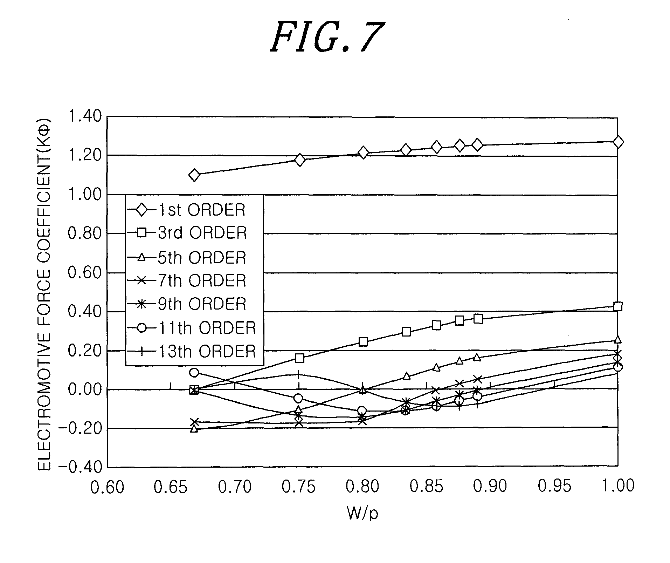

Next, the simulation results on a relationship between the harmonic components (electromotive force coefficient Kϕ) and the outer peripheral width W of the permanent magnet 22 will be described with reference to FIG. 7. In FIG. 7, the horizontal axis represents a ratio W/p of the outer peripheral width W of the permanent magnet 22 to the pitch p between adjacent permanent magnets 22, and the vertical axis represents electromotive force coefficients Kϕ for the respective harmonic components.

As shown in FIG. 7, it has been found that in the case of fundamental wave (the first order), electromotive force coefficient Kϕ gradually increases as the ratio W/p of the outer peripheral width W of the permanent magnet 22 to the pitch p between the adjacent permanent magnets 22 increases. Further, the even-order harmonic components do not appear. In the case of the third harmonic, the electromotive force coefficient Kϕ increases gradually as the ratio W/p increases. In the case of three-phase AC voltage, the harmonic component of the third order and the harmonic components of odd multiples (the ninth order, the fifteenth order, ...) thereof are offset by using Y (star) connection on the respective phase coils.

Further, in the case of the fifth harmonic, the electromotive force coefficient Kϕ increases gradually as the ratio W/p increases, and the electromotive force coefficient Kϕ becomes substantially zero if the ratio W/p is 0.8 (4/5). Furthermore, in the case of the seventh harmonic, the electromotive force coefficient Kϕ increases gradually as the ratio W/p increases, and the electromotive force coefficient Kϕ becomes substantially zero if the ratio W/p is about 0.86 (6/7).

That is, it has been found that it is preferable that in the case of mainly reducing the fifth harmonic component, the outer peripheral width W of the permanent magnet 22 is set to a value close to 4/5 in the range from 4/5 to 6/7 of the pitch p between the adjacent permanent magnets 22. Further, it has been found that in the case of mainly reducing the seventh harmonic component, the outer peripheral width W of the permanent magnet 22 is set to a value close to 6/7 in the range from 4/5 to 6/7 of the pitch p between the adjacent permanent magnets 22. Furthermore, it has been found that the fifth and the seventh harmonic can be reduced uniformly if the outer peripheral width W of the permanent magnet 22 is set to an intermediate value (for example, W = 29/35) in the range from 4/5 to 6/7 of the pitch p between the adjacent permanent magnets 22.

As described above, the ninth harmonic is offset when the respective phase coils are Y (star) connected in the case of three-phase AC voltage. Further, in the case of the eleventh harmonic, the electromotive force coefficient Kϕ decreases gradually as the ratio W/p increases to about 0.8, and then the electromotive force coefficient Kϕ increases gradually as the ratio W/p increases from about 0.8.

Furthermore, in the case of the thirteenth harmonic, the electromotive force coefficient Kϕ increases gradually as the ratio W/p increases to about 0.75, and then the electromotive force coefficient Kϕ decreases gradually as the ratio W/p increases from about 0.75. And the electromotive force coefficient Kϕ becomes substantially zero when the ratio W/p is 0.8. After that, the electromotive force coefficient Kϕ decreases gradually as the ratio W/p increases to about 0.85, and then the electromotive force coefficient Kϕ increases gradually as the ratio W/p increases from about 0.85.

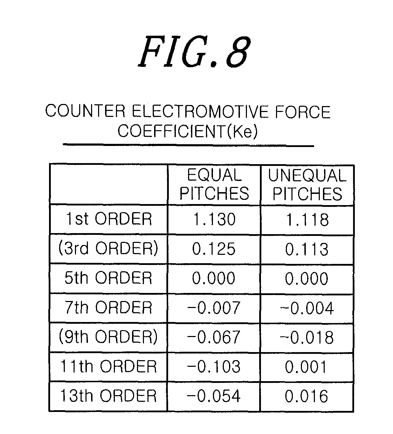

Next, the predetermined pitch angle θᵢₑ, which is obtained after the present inventors have conducted extensive studies, will be described in detail. FIG. 8 shows counter electromotive force coefficients Ke of the rotary electric machine 200 (see FIG. 5) in which the mechanical slot pitch angles (slot vector pitch angles) are equal to each other and the rotary electric machine 100 (see FIG. 1) of the present embodiment in which the mechanical slot pitch angles (slot vector pitch angles) are unequal. That is, FIG. 8 shows the results for the rotary electric machine 100 in which the ratio W/p of the outer peripheral width W of the permanent magnet 22 to the pitch p between the adjacent permanent magnets 22 is 0.8 (4/5), and the slot vectors are moved clockwise or counterclockwise by 8.25° (pitch angle θᵢₑ) from the state in which the slot vector pitches are equal (see FIG. 4).

As shown in FIG. 8, the counter electromotive force coefficients Ke of the fundamental waves (the first order) of the rotary electric machine 200 (equal pitches) and the rotary electric machine 100 (unequal pitches) are 1.130 and 1.118 respectively. Further, the counter electromotive force coefficient Ke of the third harmonic is not zero, but the harmonic components Ke of odd multiples (the third order, the ninth order, the fifteenth order, ...) of the third order are offset when the coils of three phases are connected in the Y (star) connection at the three-phase AC voltage as described above. Furthermore, the counter electromotive force coefficient Ke of the fifth harmonic is zero when the ratio W/p of the outer peripheral width W of the permanent magnet 22 to the pitch p between the adjacent permanent magnets 22 is 0.8 (4/5).

The counter electromotive force coefficients Ke of the seventh harmonics of the rotary electric machine 200 and the rotary electric machine 100 are -0.007 and -0.004 respectively, and the counter electromotive force coefficient Ke of the rotary electric machine 100 (unequal pitches) of the present embodiment is reduced by about 40% compared to that of the rotary electric machine 200. Further, the counter electromotive force coefficient Ke of the ninth harmonic is not zero, but the counter electromotive force coefficient Ke of the ninth harmonic is offset by connecting the coils of three phases in the Y (star) connection as described above.

The counter electromotive force coefficients Ke of the eleventh harmonics of the rotary electric machine 200 and the rotary electric machine 100 are -0.103 and 0.001 respectively, and the counter electromotive force coefficient Ke of the rotary electric machine 100 (unequal pitches) of the present embodiment is reduced by about 99% compared to that of the rotary electric machine 200. Further, the counter electromotive force coefficients Ke of the thirteenth harmonics of the rotary electric machine 200 and the rotary electric machine 100 are -0.054 and 0.016 respectively, and the counter electromotive force coefficient Ke of the rotary electric machine 100 (unequal pitches) of the present embodiment is reduced by about 70% compared to that of the rotary electric machine 100. That is, it has been found that the counter electromotive force coefficients Ke of the seventh, the eleventh and the thirteenth harmonic are reduced by setting the mechanical slot pitch angles (slot vector pitch angles) to be unequal.

In the present embodiment, as described above, the slot vectors are configured such that the slot vector pitch angles between the slot vectors have unequal pitches rather than equal pitches. Accordingly, it is possible to reduce the harmonics of the higher order unlike the case where the slot vector pitch angles between the slot vectors have equal pitches.

Further, the number q of slots per pole per phase is set to a fraction having an odd denominator and an even numerator. Accordingly, since the numerator of the number q of slots per pole per phase is an even number, the number of slot vectors becomes an even number. As a result, unlike the case where the number of slot vectors is an odd number, the slot vectors may be arranged in point symmetry even if the slot vector pitch angles arranged at equal pitches are changed to have unequal pitches.

Further, in the present embodiment, each of the slot vectors is moved clockwise or counterclockwise by the predetermined pitch angle θᵢₑ while the slot vectors are kept in point symmetry from the state in which slot vector pitch angles between the slot vectors have equal pitches, as described above, so that the slot vector pitch angles between the slot vectors are configured to have unequal pitches. Accordingly, since the slot vectors are arranged in point symmetry unlike the case in which the slot vectors are not arranged in point symmetry, it is possible to rotate the rotary electric machine 100 (rotor 2) in a balanced manner even when the slot vector pitch angles are changed to have unequal pitches.

As described above, in the present embodiment, the number m of phases of the induced voltage is three (U phase, V phase and W phase), Ns slots 12 are distributed to six phase zones of the U phase zone, the U* phase zone in which a current flows in a direction opposite to that of the U phase zone, the V phase zone, the V* phase zone in which a current flows in a direction opposite to that of the V phase zone, the W phase zone and the W* phase zone in which a current flows in a direction opposite to that of the W phase zone. Further, each of the slot vectors included in each of the phase zones is moved clockwise or counterclockwise by the predetermined pitch angle θᵢₑ with respect to the central axis C of the group of slot vectors included in the corresponding phase zone from the state in which slot vector pitch angles have equal pitches, the slot vector pitch angles between the slot vectors are configured to have unequal pitches.

Thus, since the slot vector pitch angles in the respective phase zones have unequal pitches while the slot vectors are kept in point symmetry, unlike the case where the slot vector pitch angles of only part of three phases have unequal pitches, it is possible to rotate the rotary electric machine 100 (rotor 2) in a balanced manner.

Further, in the present embodiment, each of the slot vectors included in each of the phase zones is moved clockwise or counterclockwise by the predetermined pitch angle θᵢₑ in the direction toward the central axis C of the group of slot vectors included in the corresponding phase zone from the state in which slot vector pitch angles have equal pitches, slot vector pitch angles between the slot vectors are configured to have unequal pitches. Thus, since the slot vectors included in the respective phase zones are moved in the same way, the slot vectors may be easily arranged in point symmetry.

As described above, in the present embodiment, each of the slots 12 is moved clockwise or counterclockwise by the predetermined mechanical pitch angle θᵢₘ while the slots 12 are kept in point symmetry, from the state in which the mechanical slot pitch angles between the slots 12 have equal pitches, the slot vector pitch angles are configured to have unequal pitches. Thus, since the pitches between the coils 14 disposed in the slots 12 become unequal, the slot vector pitch angles can be easily changed to have unequal pitches.

Furthermore, in the present embodiment, as described above, the coils 14 are wound in the slots 12 in a concentrated winding manner such that the number q of slots per pole per phase becomes a fraction satisfying 1/4 < q < 1/2. In the rotary electric machine 100 in which the coils 14 are wound in the slots 12 in a concentrated winding manner, cogging due to harmonics is likely to occur. In the present embodiment, since the slot vector pitch angles have unequal pitches, it is possible to readily reduce the cogging due to harmonics.

As described above, in the present embodiment, the outer peripheral width W of the permanent magnet 22 is configured to have a value which is 4/5 of the pitch p between the adjacent permanent magnets 22. Thus, it is possible to reliably reduce the harmonic component of the fifth order.

Further, in the present embodiment, as described above, the rotary electric machine 100 is configured such that the number q of slots per pole per phase is 2/5. Thus, in the rotary electric machine 100 in which the coils 14 are wound in the slots 12 in a concentrated winding manner, it is possible to easily reduce the harmonics.

As described above, in the present embodiment, the number m of phases of the induced voltage is three, the number Ns of the slots 12 is twelve, and the number P of poles is ten. Thus, the number q (2/5) of slots per pole per phase can be easily set to a fraction having an odd denominator and an even numerator.

Further, it should be considered that the embodiment disclosed herein is illustrative and not restrictive in all respects. The disclosed description of the embodiment is merely exemplary, is indicated by the appended claims, and further includes all changes that fall within a range and meaning equivalent to the scope of the claims.

For example, in the above embodiment, an example of the rotary electric machine in which the coils 14 are wound in the slots 12 in a concentrated winding manner and the number q of slots per pole per phase is 2/5 has been illustrated, but the number q of slots per pole per phase may be 2/7, 4/11, 6/13, 8/17, 10/21, ....

Alternatively, the coils 14 may be wound in the slots 12 in a distributed winding manner and the number q of slots per pole per phase may be 4/5, 6/5, 8/5, 12/5, 14/5 ... (denominator is 5), 4/7, 6/7, 8/7, 10/7 ... (denominator is 7), 6/11, 8/11, 10/11, 12/11 ... (denominator is 11), 8/13, 10/13, 12/13, 14/13 ... (denominator is 13), 10/17, 12/17, 14/17, 16/17, 18/17, 20/17 ... (denominator is 17), 12/21 ... (denominator is 21).

Further, in the above embodiment, an example in which each of slot vectors is moved clockwise or counterclockwise by a predetermined pitch angle of 8.25° from the state where slot vector pitch angles have equal pitches has been illustrated. However, the predetermined pitch angle is not limited to 8.25° as long as it is possible to reduce harmonic components. Preferably, the predetermined pitch angle θᵢₑ by which the slot vector is moved is less than 1/2 of the slot vector pitch angle when the slot vector pitch angles have equal pitches.

Furthermore, in the above embodiment, the slot vector pitch angles are configured to have unequal pitches by moving each of slots clockwise or counterclockwise by the mechanical pitch angle θᵢₘ from the state where mechanical slot pitch angles between the slots have equal pitches. However, the present disclosure is not limited thereto. For example, the slot vector pitch angles may be configured to have unequal pitches by providing a skew or the like.

Further, although the number of phases of the induced voltage is three in the above embodiment, the number of phases of the induced voltage may be less or more than three.

Furthermore, in the present embodiment, the outer peripheral width of the permanent magnet is 4/5 of the pitch p between the adjacent permanent magnets, but the outer peripheral width of the permanent magnet may be set in the range from 4/5 to 6/7 of the pitch p between the adjacent permanent magnets.

It should be understood by those skilled in the art that various modifications, combinations, sub-combinations and alterations may occur depending on design requirements and other factors insofar as they are within the scope of the appended claims or the equivalents thereof.

## Claims

1. A rotary electric machine comprising:
a rotor core in which one or more permanent magnets are provided;
a stator core disposed radially opposite to the rotor core, a plurality of slots being provided in the stator core; and
coils disposed in the slots of the stator core,
wherein the number q of slots per pole per phase, which is a value obtained by dividing the number Ns of the slots by the number P of poles of the permanent magnets and the number m of phases of a voltage induced in the coils, is a fraction having an odd denominator and an even numerator, and
wherein slot vectors which are electrical phases of the coils disposed in the slots are configured such that slot vector pitch angles between the slot vectors have unequal pitches.

2. The rotary electric machine of claim 1, wherein the slot vector pitch angles of the slot vectors are set to have unequal pitches by moving each of the slot vectors clockwise or counterclockwise by a predetermined pitch angle θᵢₑ while keeping the slot vectors in point symmetry from a state in which slot vector pitch angles of the slot vectors have equal pitches.

3. The rotary electric machine of claim 2, wherein the number m of phases of the voltage is three, which are U phase, V phase and W phase, and
wherein, if the Ns slots are distributed to a U phase zone, a U* phase zone in which a current flows in a direction opposite to that of the U phase zone, a V phase zone, a V* phase zone in which a current flows in a direction opposite to that of the V phase zone, a W phase zone and a W* phase zone in which a current flows in a direction opposite to that of the W phase zone, the slot vector pitch angles of the slot vectors are set to have unequal pitches by moving each of the slot vectors included in each of the phase zones clockwise or counterclockwise by the predetermined pitch angle θᵢₑ with respect to a central axis of a group of slot vectors included in the corresponding phase zone from a state in which the slot vector pitch angles have equal pitches.

4. The rotary electric machine of claim 3, wherein the slot vector pitch angles of the slot vectors are set to have unequal pitches by moving each of the slot vectors included in each of the phase zones clockwise or counterclockwise by the predetermined pitch angle θᵢₑ in a direction toward the central axis of the group of slot vectors included in the corresponding phase zone from the state in which the slot vector pitch angles have equal pitches.

5. The rotary electric machine of any one of claims 1 to 4, wherein the slot vector pitch angles are set to have unequal pitches by moving each of the slots clockwise or counterclockwise by a predetermined pitch angle θᵢₘ while keeping the slots in point symmetry from a state in which mechanical slot pitch angles of the slots have equal pitches.

6. The rotary electric machine of any one of claims 1 to 5, wherein the coils are wound in the slots in a concentrated winding manner such that the number q of slots per pole per phase becomes a fraction satisfying 1/4 < q < 1/2.

7. The rotary electric machine of any one of claims 1 to 6, wherein the number of the permanent magnets is two or more, and the permanent magnets are provided in an outer peripheral portion of the rotor core, and
wherein an outer peripheral width of each of the permanent magnets has a value equal to or greater than 4/5 and equal to or less than 6/7 of a pitch between adjacent permanent magnets.

8. The rotary electric machine of claim 7, wherein the outer peripheral width of each of the permanent magnets has a value of 4/5 of the pitch between the adjacent permanent magnets.

9. The rotary electric machine of claim 7, wherein each of the permanent magnets has a tapered shape in which a width decreases toward an outer periphery of the rotor.

10. The rotary electric machine of claim 7, wherein a radius of curvature of an outer periphery of each of the permanent magnets is substantially equal to a radius of curvature of an inner periphery of the stator core.

11. The rotary electric machine of any one of claims 1 to 10, wherein the number q of slots per pole per phase is set to be 2/5.

12. The rotary electric machine of claim 11, wherein the number m of phases of the voltage is three, the number Ns of the slots is twelve, and the number P of poles is ten.
